# EUROPEAN PATENT APPLICATION

(11) **EP 4 539 427 A1**
(43) Date of publication of application: **16.04.2025**
(21) Application number: 23853882.1
(22) Date of filing: 24.03.2023
(51) Int. Cl.: H04L 47/6275

(54) **CONTROL METHOD, COMMUNICATION METHOD, CONTROLLER, NODE DEVICE, AND READABLE MEDIUM**

(30) Priority: 19.08.2022 CN 202210998968
(71) Applicant: ZTE Corporation, Shenzhen, Guangdong 518057 (CN)
(72) Inventor: GAO, Chenqiang, Shenzhen, Guangdong 518057 (CN); YU, Jinghai, Shenzhen, Guangdong 518057 (CN)
(74) Representative: Canzler & Bergmeier Patentanwälte Partnerschaft mbB
(86) International application number: PCT/CN2023/083767
(87) International publication number: WO 2024/036969

(57) **Abstract**

The present application provides a control method, comprising: configuring and issuing a time gate list, wherein the time gate list comprises at least one deterministic queue and a plurality of time slices, in each deterministic queue, gates corresponding to periodic time slices of the deterministic queue are open, gates corresponding to periodic time slices of other deterministic queues are closed, gates corresponding to free time slices are open, the periodic time slices of the deterministic queue are time slices corresponding to the times when the deterministic queue periodically forwards data packets of a deterministic service flow, and the free time slices are time slices other than the periodic time slices of each deterministic queue. The present invention further provides a communication method, a controller, a node device, and a computer readable medium.

## Description

### CROSS REFERENCE TO RELATED APPLICATIONS

The present disclosure claims the priority to Chinese Patent Application No. 202210998968.2 filed on August 19, 2022, the contents of which are incorporated herein by reference in their entirety.

### TECHNICAL FIELD

The present disclosure relates to, but is not limited to, the technical field of communications.

### BACKGROUND

In a deterministic network, deterministic queues with different priorities are configured for deterministic service flows, and the deterministic service flows with different traffic classes (traffic-class) correspond to the different priorities and enter the different deterministic queues; normal flows enter different normal queues according to the Quality of Service (QoS); and the deterministic service flows in the deterministic queues can preempt the normal flows in the normal queues, so as to be sent preferentially.

### SUMMARY

The present disclosure provides a control method, a communication method, a controller, a node device, and a computer readable medium.

In a first aspect, the present disclosure provides a control method, including: configuring and issuing a time gate control list; wherein the time gate control list includes at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

In a second aspect, the present disclosure provides a communication method, including: forwarding data packets of at least one deterministic data stream according to a time gate control list; wherein, the time gate control list includes at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

In a third aspect, the present disclosure provides a controller, including: one or more processors; and a storage device having stored thereon one or more programs which, when executed by the one or more processors, cause the one or more processors to implement any control method described herein.

In a fourth aspect, the present disclosure provides a node device, including: one or more processors; and a storage device having stored thereon one or more programs which, when executed by the one or more processors, cause the one or more processors to implement any communication method described herein.

In a fifth aspect, the present disclosure provides a computer readable medium having stored thereon a computer program which, when executed by a processor, causes the processor to implement any control method and/or any communication method described herein.

### BRIEF DESCRIPTION OF DRAWINGS

FIG. 1 is a schematic diagram of a periodic time gate control list;
FIG. 2 is a schematic diagram illustrating a comparison between bursty traffic and a periodic deterministic service flow;
FIG. 3 is a flowchart illustrating a control method according to the present disclosure;
FIG. 4 is a schematic diagram of a time gate control list according to the present disclosure;
FIG. 5 is a flowchart of some operations in another control method according to the present disclosure;
FIG. 6 is a schematic diagram of a real-phase time gate control list according to the present disclosure;
FIG. 7 is a schematic diagram of a virtual-phase time gate control list according to the present disclosure;
FIG. 8 is a flowchart of some operations in still another control method according to the present disclosure;
FIG. 9 is a flowchart illustrating a communication method according to the present disclosure;
FIG. 10 is a block diagram of a controller according to the present disclosure;
FIG. 11 is a block diagram of a node device according to the present disclosure;
FIG. 12 is a block diagram of a computer readable medium according to the present disclosure;
FIG. 13 is a schematic diagram of another real-phase time gate control list according to the present disclosure;
FIG. 14 is a schematic diagram of another virtual-phase time gate control list according to the present disclosure;
FIG. 15 is a schematic diagram of another time gate control list according to the present disclosure;
FIG. 16 is a schematic diagram of still another real-phase time gate control list according to the present disclosure;
FIG. 17 is a schematic diagram of still another virtual-phase time gate control list according to the present disclosure;
FIG. 18 is a schematic diagram of still another time gate control list according to the present disclosure.

### DETAIL DESCRIPTION OF EMBODIMENTS

In order to enable those of ordinary skill in the art to better understand the technical solutions of the present disclosure, a control method, a communication method, a controller, a node device, and a computer readable medium provided by the present disclosure are described in detail below with reference to the drawings.

Exemplary implementations of the present disclosure will be described more fully below with reference to the drawings, but the exemplary implementations described herein may be embodied in different forms and should not be interpreted as being limited to the implementations described herein. Rather, the implementations are provided to make the present disclosure thorough and complete, and may enable those of ordinary skill in the art to fully understand the scope of the present disclosure.

The implementations described herein and the features therein can be combined with one another if no conflict is incurred.

The term "and/or" used herein includes any and all combinations of one or more associated listed items.

The terms used herein are merely used to describe specific implementations, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In order to guarantee end-to-end delays of deterministic service flows, a Time Awareness Shaper (TAS) scheduling mechanism is defined and dynamically provides on/off control for egress queues based on a preset periodic Gate Control List (GCL), gate control time is calculated for each node on a path, and data packets in deterministic queues are scheduled through opening and closing of gates, so that the deterministic service flows can be forwarded at preset gate open time.

However, for example, the scheduling mechanism based on the periodic gate control list cannot guarantee the end-to-end delays, and there is a large jitter of the end-to-end delays.

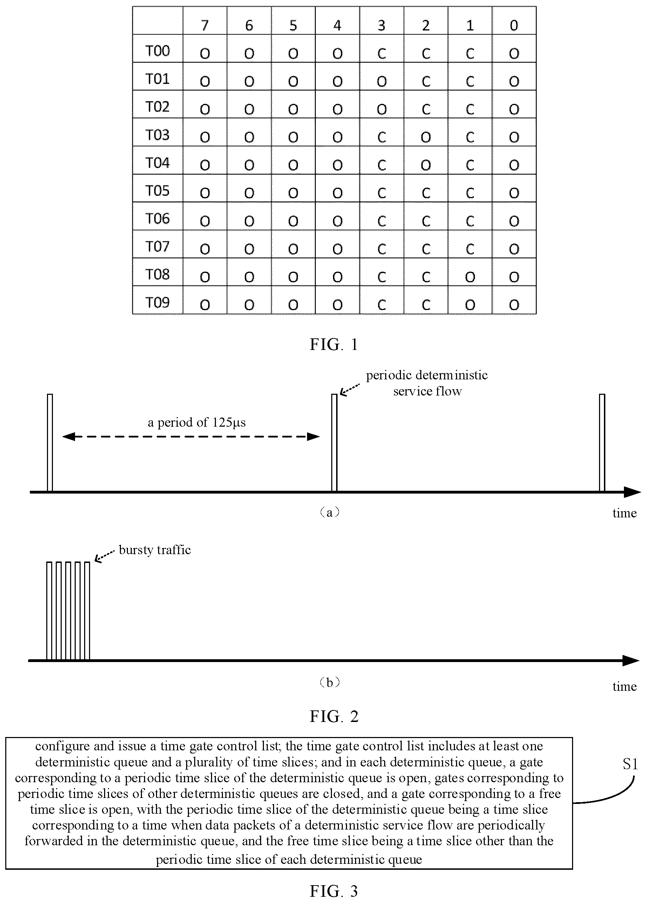

The deterministic service flows periodically send packets and enter different deterministic queues according to priorities; and data packets are forwarded in the deterministic queues according to the periodic time gate control list, and can reach receiving points within determined end-to-end delays. As shown in FIG. 1, the periodic time gate control list includes eight queues, which correspond to a traffic-class of 7 to a traffic-class of 0 respectively, and the queues corresponding to the traffic-classes of 3, 2, and 1 are used as the deterministic queues; and the periodic time gate control list includes ten time slices from T00 to T09, and the ten time slices are cycled as one gate control cycle. A deterministic service flow corresponding to the deterministic queue with the traffic-class of 3 is forwarded in the time slices T01 and T02, as shown in FIG. 1, gates of the time slices T01 and T02 corresponding to the deterministic queue with the traffic-class of 3 are set to O (Open) in the periodic time gate control list; a deterministic service flow corresponding to the deterministic queue with the traffic-class of 2 is forwarded in the time slices T03 and T04, as shown in FIG. 1, gates of the time slices T03 and T04 corresponding to the deterministic queue with the traffic-class of 2 are set to O in the periodic time gate control list; a deterministic service flow corresponding to the deterministic queue with the traffic-class of 1 is forwarded in the time slices T08 and T09, as shown in FIG. 1, gates of the time slices T08 and T09 corresponding to the deterministic queue with the traffic-class of 1 are set to O (Open) in the periodic time gate control list; and no forwarding is performed in all the deterministic queues with the traffic-classes of 3, 2, and 1 in the time slices T00, T05, T06, and T07, as shown in FIG. 1, gates of the time slices T00, T05, T06, and T07 corresponding to the deterministic queues with the traffic-classes of 3, 2, and 1 are set to C (Close) in the periodic time gate control list. The queues with the traffic-classes of 7, 6, 5, 4, and 0 are not enabled or are used as normal queues, and gates corresponding to those queues are set to O.

However, the deterministic service flows may be faced with bursty traffic, such as burst control signals. The bursty traffic may cause generation of a plurality of burst packets in a short time. The burst packets have a relative short packet length compared with that of the periodic data packets of the deterministic service flows. FIG. 2 shows a comparison between bursty traffic and a periodic deterministic service flow, (a) denotes the periodic deterministic service flow with a period of 125µs, and (b) denotes the bursty traffic generated in a short time and including five data packets.

As shown in FIG. 1, the gates are merely preset for the periodic deterministic service flows in the periodic time gate control list, and the bursty traffic is not provided with a corresponding gate. Therefore, when arriving at a deterministic queue, the bursty traffic cannot be forwarded in time in a case where the gates of the deterministic queue are closed, so that the bursty traffic needs to wait for an open gate in a next gate control cycle to be forwarded, which cannot guarantee an end-to-end delay and may also affect normal forwarding of the data packets of the periodic deterministic service flows. In addition, when the data packets of the deterministic service flows do not arrive at the deterministic queues in time due to jitters of some forwarding nodes and miss the preset open gates, the data packets need to wait for next open gates to be forwarded, and especially for an edge node with less open gates, the data packets need to wait for longer time, which may increase jitters of end-to-end delays.

In view of the above, in a first aspect, referring to FIG. 3, the present disclosure provides a control method, including: S1, configuring and issuing a time gate control list; the time gate control list includes at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

In an implementation of the present disclosure, a controller configures the time gate control list and issues the time gate control list to a node device. In an implementation of the present disclosure, for one or more node devices, the controller respectively configures a time gate control list for each node device, and respectively issues the configured time gate control list(s) to the corresponding node device(s), so as to enable the node device(s) to forward data packets according to the respective time gate control list(s).

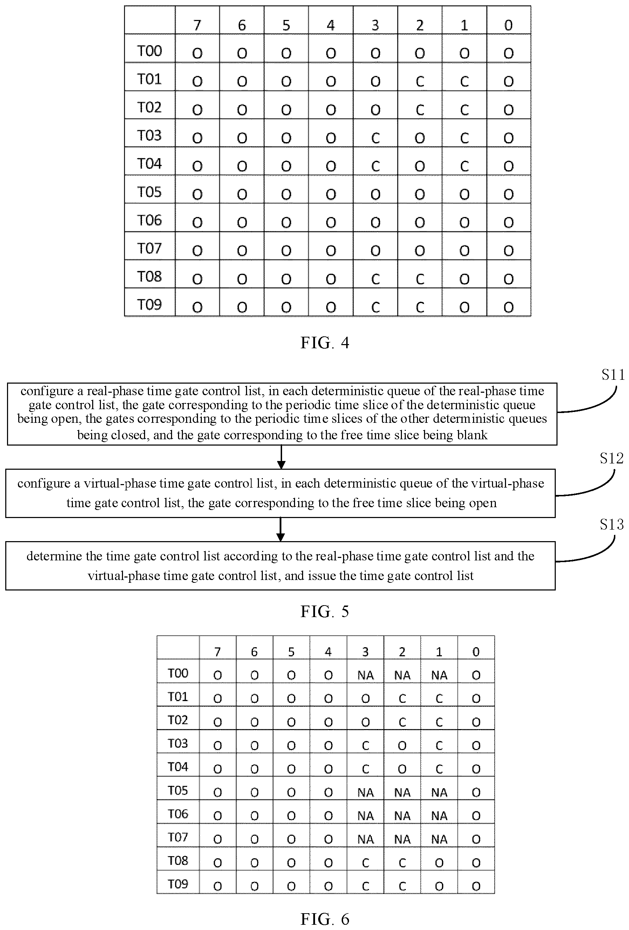

The time gate control list configured and issued by the controller according to the present disclosure is exemplarily illustrated by FIG. 4. In FIG. 4, O represents open, and C represents closed.

As shown in FIG. 4, the time gate control list configured and issued by the controller includes eight queues, which correspond to a traffic-class of 7 to a traffic-class of 0 respectively, and the queues corresponding to the traffic-classes of 3, 2, and 1 are used as the deterministic queues; and the time gate control list includes ten time slices from T00 to T09, and the ten time slices are cycled as one gate control cycle. For the deterministic queue with the traffic-class of 3, the time slices T01 and T02 are the periodic time slices; for the deterministic queue with the traffic-class of 2, the time slices T03 and T04 are the periodic time slices; for the deterministic queue with the traffic-class of 1, the time slices T08 and T09 are the periodic time slices; and the time slices T00, T05, T06, and T07 are the free time slices. In the deterministic queue with the traffic-class of 3, the gates corresponding to the time slices T01 and T02 are open, and the gates corresponding to the time slices T03, T04, T08, and T09 are closed; in the deterministic queue with the traffic-class of 2, the gates corresponding to the time slices T03 and T04 are open, and the gates corresponding to the time slices T01, T02, T08, and T09 are closed; in the deterministic queue with the traffic-class of 1, the gates corresponding to the time slices T08 and T09 are open, and the gates corresponding to the time slices T01, T02, T03, and T04 are closed; and in the deterministic queues with the traffic-classes of 3, 2, and 1, the gates corresponding to the time slices T00, T05, T06, and T07 are all open.

In some scenarios, after the controller issues the time gate control list shown in FIG. 4 to a node device, when a deterministic service flow corresponding to the deterministic queue with the traffic-class of 3 is faced with bursty traffic and burst data packets arrive at the deterministic queue with the traffic-class of 3 in the time slice T05, since the gate of the time slice T05 corresponding to the deterministic queue with the traffic-class of 3 is open, the burst data packets can be forwarded without waiting for the open gate of the time slice T01 in a next gate control cycle, which avoids an increase in delay and has no influence on normal forwarding of periodic data packets in the time slice T01 in the next control gate cycle.

In some scenarios, after the controller issues the time gate control list shown in FIG. 4 to a node device, when data packets of a deterministic service flow corresponding to the deterministic queue with the traffic-class of 3 arrive at the deterministic queue with the traffic-class of 3 in the time slice T03 due to a jitter of an upstream node, since the gate of the time slice T03 is configured to be open for a deterministic service flow corresponding to the deterministic queue with the traffic-class of 2, the gate of the time slice T03 corresponding to the deterministic queue with the traffic-class of 3 is closed, so that the data packets cannot be forwarded; but since the gate of the time slice T05 is open, the data packets may be forwarded in the time slice T05, which avoids an increase in delay and has no influence on normal forwarding of periodic data packets in the time slice T01 in a next control gate cycle.

In the control method provided in the implementations of the present disclosure, the controller configures and issues the time gate control list; and in each deterministic queue, the gate of the time slice in which the data packets of the deterministic service flow are periodically forwarded is set to be open, and the gates of the time slices in which the data packets of the deterministic service flows are not forwarded in all deterministic queues are set to be open. In this way, the data packets of the bursty traffic or the data packets which miss the periodic time slices due to the jitter can be forwarded in the free time slice without waiting for an open gate in a periodic time slice in a next gate control cycle, so that delays of the deterministic service flows are guaranteed, and normal forwarding of periodic data packets in the periodic time slice in the next gate control cycle is not affected, thereby avoiding delay jitter.

How to configure the time gate control list is not particularly limited in the implementations of the present disclosure.

In some implementations, two phase time gate control lists are maintained in the controller, and include a real-phase time gate control list (R-GCL) and a virtual-phase time gate control list (V-GCL). The real-phase time gate control list is obtained by calculation according to an existing deterministic service flow which periodically sends packets, and is configured to configure the gate of the periodic time slice in the deterministic queue; and the virtual-phase time gate control list is configured to configure the gate of the free time slice in the deterministic queue.

Accordingly, in some implementations, referring to FIG. 5, configuring and issuing the time gate control list includes: S11, configuring a real-phase time gate control list, in each deterministic queue of the real-phase time gate control list, the gate corresponding to the periodic time slice of the deterministic queue being open, the gates corresponding to the periodic time slices of the other deterministic queues being closed, and the gate corresponding to the free time slice being blank; S12, configuring a virtual-phase time gate control list, in each deterministic queue of the virtual-phase time gate control list, the gate corresponding to the free time slice being open; and S13, determining the time gate control list according to the real-phase time gate control list and the virtual-phase time gate control list, and issuing the time gate control list.

FIG. 6 is a schematic diagram of a real-phase time gate control list according to the present disclosure. In FIG. 6, O represents open, and C represents closed. As shown in FIG. 6, in the real-phase time gate control list, for the deterministic queue with the traffic-class of 3, the time slices T01 and T02 are the periodic time slices; for the deterministic queue with the traffic-class of 2, the time slices T03 and T04 are the periodic time slices; for the deterministic queue with the traffic-class of 1, the time slices T08 and T09 are the periodic time slices; and the time slices T00, T05, T06, and T07 are free time slices. In the deterministic queue with the traffic-class of 3, the gates corresponding to the time slices T01 and T02 are open, and the gates corresponding to the time slices T03, T04, T08, and T09 are closed; in the deterministic queue with the traffic-class of 2, the gates corresponding to the time slices T03 and T04 are open, and the gates corresponding to the time slices T01, T02, T08, and T09 are closed; in the deterministic queue with the traffic-class of 1, the gates corresponding to the time slices T08 and T09 are open, and the gates corresponding to the time slices T01, T02, T03, and T04 are closed; and the time slices T00, T05, T06, and T07 are the free time slices, and the gates corresponding to the time slices T00, T05, T06, and T07 are blank (NA) in the deterministic queues with the traffic-classes of 3, 2, and 1.

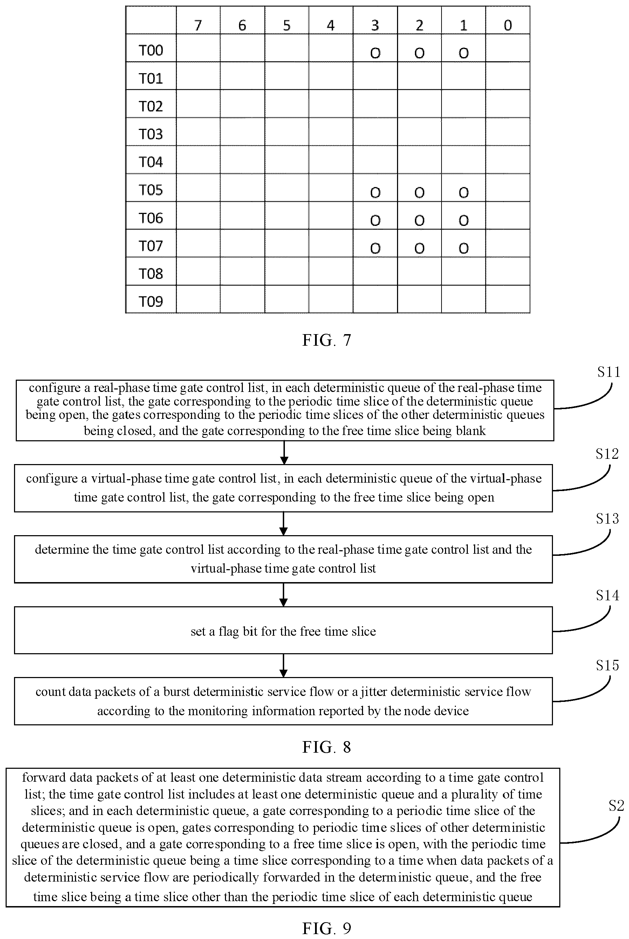

FIG. 7 is a schematic diagram of a virtual-phase time gate control list according to the present disclosure. In FIG. 7, O represents open, and C represents closed. As shown in FIG. 7, in the virtual-phase time gate control list, the time slices T00, T05, T06, and T07 are the free time slices, and the gates corresponding to the time slices T00, T05, T06, and T07 are open in the deterministic queues with the traffic-classes of 3, 2, and 1.

The time gate control list shown in FIG. 4 may be obtained by combining the real-phase time gate control list shown in FIG. 6 with the virtual-phase time gate control list shown in FIG. 7.

How to configure the real-phase time gate control list is not particularly limited in the implementations of the present disclosure.

In some implementations, configuring the real-phase time gate control list includes: calculating a path of a target deterministic service flow; calculating a time gate for a node device on the path to forward data packets of the target deterministic service flow; and configuring the real-phase time gate control list according to the time gate.

In the implementations of the present disclosure, the controller may configure, according to an existing deterministic service flow which periodically sends packets, a time gate control list for each node device on a path of the deterministic service flow, and issue the time gate control list; or, the controller may configure, according to a newly initiated deterministic service flow, a time gate control list for each node device on a path of the newly initiated deterministic service flow, and issue the time gate control list. However, the implementations of the present disclosure are not limited thereto.

In some implementations, the controller configures, according to an existing deterministic service flow which periodically sends packets, a time gate control list for each node device on a path of the deterministic service flow and issues the time gate control list, and the target deterministic service flow refers to the existing deterministic service flow which periodically sends the packets. It should be noted that the path of the target deterministic service flow which is obtained by calculation includes paths of all existing deterministic service flows; and the time gate obtained by calculation includes time gates for node devices on paths of all existing deterministic service flows to forward data packets of all existing deterministic service flows. For example, there are a plurality of existing deterministic service flows, one deterministic queue in the time gate control list corresponds to one or more deterministic service flows according to a priority of each deterministic service flow, the controller calculates a path of each deterministic service flow, determines a node device on each path, and then calculates a time gate for the node device on each path to forward data packets of each deterministic service flow, thereby determining a periodic time slice of each deterministic queue in the time gate control list for each node device and further determining a free time slice. When the real-phase time gate control list is configured, in each deterministic queue of the time gate control list for the node device, a gate corresponding to the periodic time slice of the deterministic queue is set to be open, gates corresponding to the periodic time slices of other deterministic queues are set to be closed, and a gate corresponding to the free time slice is set to be blank.

In some implementations, the controller configures, according to a newly initiated deterministic service flow, a time gate control list for each node device on a path of the newly initiated deterministic service flow, and issues the time gate control list, and the target deterministic service flow refers to the newly initiated deterministic service flow. It should be noted that the path of the target deterministic service flow which is obtained by calculation refers to the path of the newly initiated deterministic service flow; and the time gate obtained by calculation refers to a time gate for the node device on the path of the newly initiated deterministic service flow to forward data packets of the newly initiated deterministic service flow.

In some implementations, configuring the real-phase time gate control list according to the time gate includes: in a deterministic queue corresponding to the target deterministic service flow, setting a gate of a time slice corresponding to the time gate to be open; and in other deterministic queues, setting gates of the time slice corresponding to the time gate to be closed.

In some implementations, configuring the virtual-phase time gate control list includes: configuring the virtual-phase time gate control list according to the time gate.

In some implementations, the controller configures, according to an existing deterministic service flow which periodically sends packets, a time gate control list for each node device on a path of the deterministic service flow and issues the time gate control list, and the time gate obtained by calculation includes time gates for node devices on paths of all existing deterministic service flows to forward data packets of all existing deterministic service flows. The free time slice may be determined according to the time gate obtained by calculation. When the virtual-phase time gate control list is configured, a gate corresponding to the free time slice is set to be blank; and the time gate control list for the node device may be obtained by combining the real-phase time gate control list with the virtual-phase time gate control list.

Accordingly, in some implementations, configuring the virtual-phase time gate control list according to the time gate includes: determining the free time slice according to the time gate; and setting the gate of the free time slice to be open.

In some implementations, the controller configures, according to a newly initiated deterministic service flow, a time gate control list for each node device on a path of the newly initiated deterministic service flow and issues the time gate control list, and the time gate obtained by calculation refers to a time gate for the node device on the path of the newly initiated deterministic service flow to forward data packets of the newly initiated deterministic service flow. When the virtual-phase time gate control list is configured, a gate corresponding to the time gate merely needs to be removed from the virtual-phase time gate control list.

Accordingly, configuring the virtual-phase time gate control list according to the time gate includes: removing the gate of the time slice corresponding to the time gate from the virtual-phase time gate control list.

How to determine the time gate control list according to the real-phase time gate control list and the virtual-phase time gate control list is not particularly limited in the implementations of the present disclosure.

In some implementations, determining the time gate control list according to the real-phase time gate control list and the virtual-phase time gate control list and issuing the time gate control list includes: combining the real-phase time gate control list with the virtual-phase time gate control list according to one-to-one correspondence of time slices and deterministic queues, so as to obtain the time gate control list; and issuing the time gate control list.

For example, the time gate control list shown in FIG. 4 may be obtained by combining the real-phase time gate control list shown in FIG. 6 with the virtual-phase time gate control list shown in FIG. 7. It should be noted that the combination of O and NA results in O when the real-phase time gate control list shown in FIG. 6 is combined with the virtual-phase time gate control list shown in FIG. 7.

In some implementations, as shown in FIG. 4 and FIG. 6, the gates in the queues which are not enabled or are used as normal queues are set to be open, and background traffic is transmitted through the normal queues when no deterministic traffic is transmitted.

In some implementations, referring to FIG. 8, configuring and issuing the time gate control list further includes: S14, setting a flag bit for the free time slice.

With the flag bit set for the free time slice, a node device may monitor a deterministic service flow transmitted in the free time slice. Since the deterministic service flow transmitted in the free time slice is bursty traffic (i.e., a burst deterministic service flow) or a deterministic service flow which misses a periodic time slice due to jitter (i.e., a jitter deterministic service flow), the burst deterministic service flow or the jitter deterministic service flow can be monitored.

In some implementations, a node device reports monitoring information to the controller when a deterministic service flow transmitted in the free time slice is monitored by the node device.

In some implementations, referring to FIG. 8, the control method further includes: S15, counting data packets of a burst deterministic service flow or a jitter deterministic service flow according to the monitoring information reported by the node device.

In a second aspect, the present disclosure provides a communication method. Referring to FIG. 9, the communication method includes: S2, forwarding data packets of at least one deterministic data stream according to a time gate control list; the time gate control list includes at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

With the communication method provided in the implementations of the present disclosure, a node device can forward the data packets of the deterministic data stream according to the time gate control list; and in each deterministic queue of the time gate control list, the gate of the time slice in which the data packets of the deterministic service flow are periodically forwarded is set to be open, and the gates of the time slices in which the data packets of the deterministic service flows are not forwarded in all deterministic queues are set to be open. In this way, data packets of bursty traffic or data packets which miss a periodic time slice due to jitter can be forwarded in the free time slice without waiting for an open gate in a periodic time slice in a next gate control cycle, so that delays of the deterministic service flows are guaranteed, and normal forwarding of periodic data packets in the periodic time slice in the next gate control cycle is not affected, thereby avoiding delay jitter.

In some implementations, the free time slice in the time gate control list is further configured with a flag bit, and the node device may monitor a deterministic service flow transmitted in the free time slice according to the flag bit. Since the deterministic service flow transmitted in the free time slice is bursty traffic (i.e., a burst deterministic service flow) or a deterministic service flow which misses a periodic time slice due to jitter (i.e., a jitter deterministic service flow), the burst deterministic service flow or the jitter deterministic service flow can be monitored.

Accordingly, in some implementations, forwarding the data packets of the at least one deterministic data stream according to the time gate control list includes: counting the data packets of the deterministic service flow transmitted in the free time slice; and reporting monitoring information to a controller.

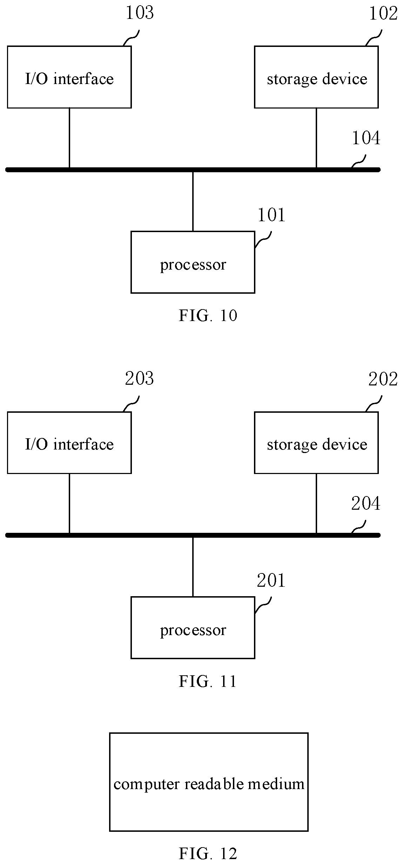

In a third aspect, referring to FIG. 10, the present disclosure provides a controller, including: one or more processors 101; a storage device 102 having stored thereon one or more programs which, when executed by the one or more processors, cause the one or more processors to perform the control method described in the first aspect of the present disclosure; and one or more input/output (I/O) interfaces 103 connected between the one or more processors and the storage device and configured to enable information interaction between the one or more processors and the storage device.

The processor 101 is a device having data processing capability, and includes, but is not limited to, a Central Processing Unit (CPU); the storage device 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write) interface 103 is connected between the processor 101 and the storage device 102, is capable of enabling the information interaction between the processor 101 and the storage device 102, and includes, but is not limited to, a data bus (Bus).

In some implementations, the processor 101, the storage device 102, and the I/O interface 103 are connected to each other through a bus 104, and then are connected to other components of a computing device.

In a fourth aspect, referring to FIG. 11, the present disclosure provides a node device, including: one or more processors 201; a storage device 202 having stored thereon one or more programs which, when executed by the one or more processors, cause the one or more processors to perform the communication method described in the second aspect of the present disclosure; and one or more I/O interfaces 203 connected between the one or more processors and the storage device and configured to enable information interaction between the one or more processors and the storage device.

The processor 201 is a device having data processing capability, and includes, but is not limited to, a CPU; the storage device 202 is a device having data storage capability, and includes, but is not limited to, an RAM (more specifically, an SDRAM, a DDR SDRAM, etc.), an ROM, an EEPROM, and a FLASH; and the I/O interface (read/write interface) 203 is connected between the processor 201 and the storage device 202, is capable of enabling the information interaction between the processor 201 and the storage device 202, and includes, but is not limited to, a data bus (Bus).

In some implementations, the processor 201, the storage device 202, and the I/O interface 203 are connected to each other through a bus 204, and then are connected to other components of a computing device.

In a fifth aspect, referring to FIG. 12, the present disclosure provides a computer readable medium having stored thereon a computer program which, when executed by a processor, causes the processor to implement the control method described in the first aspect of the present disclosure and/or the communication method described in the second aspect of the present disclosure.

In order to enable those of ordinary skill in the art to understand the technical solutions provided in the implementations of the present disclosure more clearly, the technical solutions provided in the implementations of the present disclosure are illustrated in detail below by exemplary implementations.

### First Exemplary Implementation

In the present exemplary implementation, when a demand for a new deterministic service flow exists, configuring and issuing the time gate control list includes: calculating, by the controller, a path according to the new deterministic service flow and a time gate of a node at each hop on the path; updating, according to the calculated time gate of the node at each hop, a real-phase time gate control list in two phase time gate control lists already existing in the controller in such a way that a gate of a time slice desiring a newly opened gate is set to be open; updating a virtual-phase time gate control list in the two phase time gate control lists for the node at each hop in the controller in such a way that a gate of a time slice corresponding to closed gates in all deterministic queues in the real-phase time gate control list is set to be open and no other configuration is performed; and combining the two phase time gate control lists, and issuing to a port corresponding to the node at each hop. If a time slice, which is configured with an open gate in the virtual-phase time gate control list, is configured with a flag bit, the flag bit is also issued to the port corresponding to the node at each hop.

### Second Exemplary Implementation

In the present exemplary implementation, time slices corresponding to a virtual-phase time gate control list in two phase time gate control lists are not configured with flag bits.

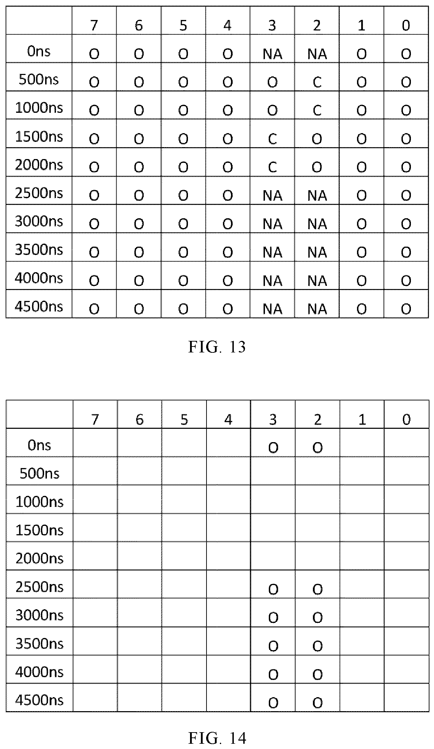

FIG. 13 shows a real-phase time gate control list already existing in the controller for a designated port of a designated node, each time slice is represented by a start time and has a length of 500ns, O represents open, C represents closed, and NA represents blank. The queues with traffic-classes of 3 and 2 are used as deterministic queues. A gate open time of the deterministic queue with the traffic-class of 3 is from 500ns to 1500ns, that is, periodic time slices of the deterministic queue with the traffic-class of 3 are 500ns and 1000ns, and gates of the periodic time slices 500ns and 1000ns are set to O in the deterministic queue with the traffic-class of 3; a gate open time of the deterministic queue with the traffic-class of 2 is from 1500ns to 2500ns, that is, periodic time slices of the deterministic queue with the traffic-class of 2 are 1500ns and 2000ns, and gates of the periodic time slices 1500ns and 2000ns are set to O in the deterministic queue with the traffic-class of 2; and the gates of the time slices 1500ns and 2000ns are set to C in the deterministic queue with the traffic-class of 3, and the gates of the time slices 500ns and 1000ns are set to C in the deterministic queue with the traffic-class of 2. In the deterministic queues with the traffic-classes of 3 and 2, the time slices other than the time slices 500ns, 1000ns, 1500ns, and 2000ns are free time slices, and gates of the free time slices are set to NA.

FIG. 14 shows a virtual-phase time gate control list already existing in the controller for the designated port of the designated node; and in the deterministic queues with the traffic-classes of 3 and 2, the gates of the time slices other than the time slices 500ns, 1000ns, 1500ns, and 2000ns are all set to O.

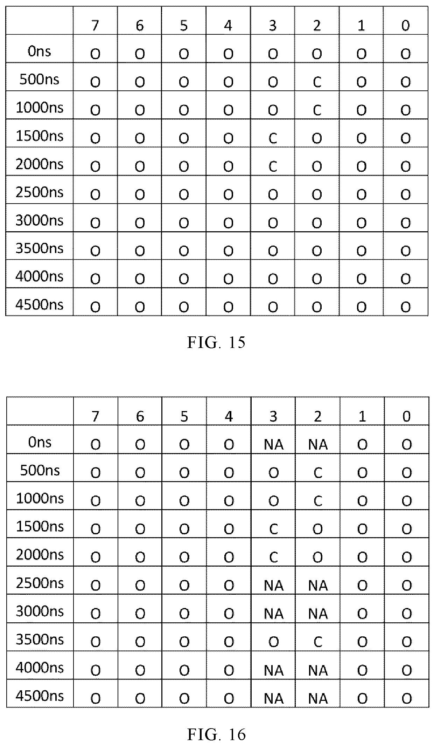

The real-phase time gate control list shown in FIG. 13 is combined with the virtual-phase time gate control list shown in FIG. 14 to obtain the time gate control list shown in FIG. 15 which is actually issued.

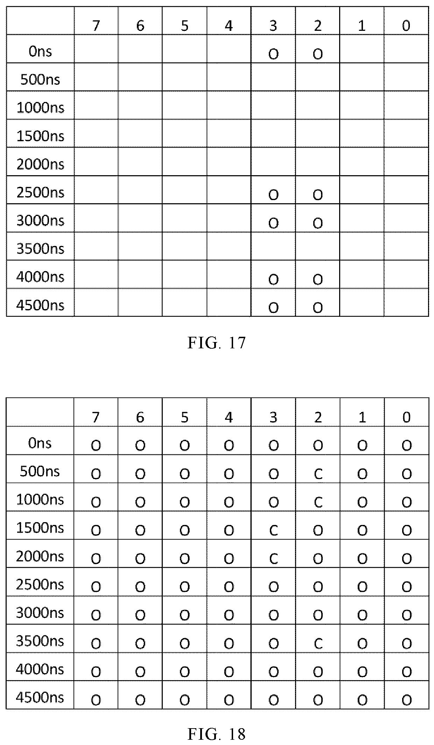

When a new deterministic service flow with the traffic-class of 3 needs to be deployed, a path of the new deterministic service flow is calculated; and the designated node is on the path of the new deterministic service flow, the new deterministic service flow is forwarded from a port 1, and a time gate is from 3500ns to 4000ns. The real-phase time gate control list shown in FIG. 13 is updated to obtain the real-phase time gate control list shown in FIG. 16, in which a gate of the time slice 3500ns is set to O in the deterministic queue with the traffic-class of 3 and the gate of the time slice 3500ns is set to C in the deterministic queue with the traffic-class of 2. The virtual-phase time gate control list shown in FIG. 14 is updated to obtain the virtual-phase time gate control list shown in FIG. 17, with the gates of the time slice 3500ns removed. The real-phase time gate control list shown in FIG. 16 is combined with the virtual-phase time gate control list shown in FIG. 17 to obtain the time gate control list shown in FIG. 18. The time gate control list shown in FIG. 18 is issued to the designated port of the designated node, so that forwarding of data packets may be performed at the designated port of the designated node according to the time gate control list shown in FIG. 18.

In the present exemplary implementation, assuming that a deterministic service flow corresponding to a deterministic service flow with the traffic-class of 2 is set to be transmitted at a moment of 2300ns, the deterministic service flow arrives at the designated port of the designated node at a moment of 2600ns due to a jitter of an upstream node, and data packets of the deterministic service flow may be forwarded because the gate is open at the moment of 2600ns according to the time gate control list shown in FIG. 18.

In contrast, if the forwarding is performed according to a standard periodic gate control list in which the gate is closed at the moment of 2600ns, the forwarding needs to be performed in a next time slice with an open gate. However, the next time slice with the open gate in the periodic gate control list is configured for an existing deterministic service flow, so that the forwarding may affect transmission of the existing deterministic service flow.

### Third Exemplary Implementation

In the present exemplary implementation, time slices corresponding to a virtual-phase time gate control list in two phase time gate control lists are configured with flag bits.

In the present exemplary implementation, there is an existing time gate control list as shown in FIG. 15 and an updated time gate control list as shown in FIG. 18. Since the time slices corresponding to the virtual-phase time gate control list are configured with the flag bits, data packets forwarded in free time slices need to be monitored. When the updated time gate control list is issued to a designated port of a designated node, the flag bits of the free time slices are issued together with the updated time gate control list, and monitoring is started during a time period from 0ns to 500ns, a time period from 2500ns to 3500ns, and a time period from 4000ns to 5000ns corresponding to the virtual-phase time gate control list. It is assumed that the bursty traffic corresponding to the deterministic queue with the traffic-class of 2 is transmitted, burst data packets arrive at the designated port of the designated node at a moment of 3500ns, the gate of the moment of 3500ns is set to be open for the new deterministic service flow corresponding to the deterministic queue with the traffic-class of 3, and the gate of the moment of 3500ns is set to be closed in the deterministic queue with the traffic-class of 2. Since the gate at a moment of 4000ns is open according to the time gate control list shown in FIG. 18, the bursty traffic may be transmitted at the moment of 4000ns. When it is monitored that the deterministic service flow corresponding to the deterministic queue with the traffic-class of 2 is transmitted at the moment of 4000ns, the deterministic service flow is reported to the controller. The reported value may be used to count data packets of bursty traffic or data packets which miss a periodic time slice due to jitter.

According to the control method provided in the present disclosure, in each deterministic queue of the time gate control list, the gate of the time slice in which the data packets of the deterministic service flow are periodically forwarded is set to be open, and the gates of the time slices in which the data packets of the deterministic service flows are not forwarded in all deterministic queues are set to be open. In this way, the data packets of the bursty traffic or the data packets which miss the periodic time slices due to the jitter can be forwarded in the free time slice without waiting for an open gate in a periodic time slice in a next gate control cycle, so that delays of the deterministic service flows are guaranteed, and normal forwarding of periodic data packets in the periodic time slice in the next gate control cycle is not affected, thereby avoiding delay jitter.

It should be understood by those of ordinary skill in the art that the functional modules/units in all or some of the operations, the systems and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A control method, comprising:
configuring and issuing a time gate control list;
wherein the time gate control list comprises at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

2. The control method of claim 1, wherein configuring and issuing the time gate control list comprises:
configuring a real-phase time gate control list, wherein, in each deterministic queue of the real-phase time gate control list, the gate corresponding to the periodic time slice of the deterministic queue is open, the gates corresponding to the periodic time slices of the other deterministic queues are closed, and the gate corresponding to the free time slice is blank;
configuring a virtual-phase time gate control list, wherein, in each deterministic queue of the virtual-phase time gate control list, the gate corresponding to the free time slice is open; and
determining the time gate control list according to the real-phase time gate control list and the virtual-phase time gate control list, and issuing the time gate control list.

3. The control method of claim 2, wherein configuring the real-phase time gate control list comprises:
calculating a path of a target deterministic service flow;
calculating a time gate for a node device on the path to forward data packets of the target deterministic service flow; and
configuring the real-phase time gate control list according to the time gate.

4. The control method of claim 3, wherein configuring the real-phase time gate control list according to the time gate comprises:
in a deterministic queue corresponding to the target deterministic service flow, setting a gate of a time slice corresponding to the time gate to be open; and
in other deterministic queues, setting gates of the time slice corresponding to the time gate to be closed.

5. The control method of claim 3, wherein configuring the virtual-phase time gate control list comprises:
configuring the virtual-phase time gate control list according to the time gate.

6. The control method of claim 5, wherein configuring the virtual-phase time gate control list according to the time gate comprises:
determining the free time slice according to the time gate; and
setting the gate of the free time slice to be open.

7. The control method of claim 5, wherein configuring the virtual-phase time gate control list according to the time gate comprises:
removing a gate of a time slice corresponding to the time gate from the virtual-phase time gate control list.

8. The control method of claim 2, wherein determining the time gate control list according to the real-phase time gate control list and the virtual-phase time gate control list and issuing the time gate control list comprises:
combining the real-phase time gate control list with the virtual-phase time gate control list according to one-to-one correspondence of time slices and deterministic queues, so as to obtain the time gate control list; and
issuing the time gate control list.

9. The control method of any one of claims 2 to 8, wherein configuring and issuing the time gate control list further comprises:
setting a flag bit for the free time slice.

10. The control method of claim 9, further comprising:
counting data packets of a burst deterministic service flow or a jitter deterministic service flow according to monitoring information reported by a node device.

11. A communication method, comprising:
forwarding data packets of at least one deterministic data stream according to a time gate control list;
wherein, the time gate control list comprises at least one deterministic queue and a plurality of time slices; and in each deterministic queue, a gate corresponding to a periodic time slice of the deterministic queue is open, gates corresponding to periodic time slices of other deterministic queues are closed, and a gate corresponding to a free time slice is open, with the periodic time slice of the deterministic queue being a time slice corresponding to a time when data packets of a deterministic service flow are periodically forwarded in the deterministic queue, and the free time slice being a time slice other than the periodic time slice of each deterministic queue.

12. The communication method of claim 11, wherein forwarding the data packets of the at least one deterministic data stream according to the time gate control list comprises:
monitoring, according to a flag bit, data packets of a deterministic service flow which are transmitted in the free time slice; and
reporting monitoring information to a controller.

13. A controller, comprising:
one or more processors; and
a storage device having stored thereon one or more programs which, when executed by the one or more processors, cause the one or more processors to implement the control method of any one of claims 1 to 10.

14. A node device, comprising:
one or more processors; and
a storage device having stored thereon one or more programs which, when executed by the one or more processors, cause the one or more processors to implement the communication method of claim 11 or 12.

15. A computer readable medium having stored thereon a computer program which, when executed by a processor, causes the processor to implement the control method of any one of claims 1 to 10 or the communication method of claim 11 or 12.
